Europäisches Patentamt

European Patent Office

Office européen des brevets

(11) Publication number: **0 199 793**
**B1**

(12) **EUROPEAN PATENT SPECIFICATION**

(45) Date of publication of patent specification: 02.08.89

(21) Application number: 85905561.8

(22) Date of filing: 16.10.85

(86) International application number:
PCT/US85/02046

(87) International publication number:
WO 86/02784 09.05.86 Gazette 86/10

(51) Int. Cl.⁴: **H 01 S 3/30**

(54) **SINGLE MIRROR INTEGRAL RAMAN LASER.**

(30) Priority: 01.11.84 US 667191

(43) Date of publication of application:
05.11.86 Bulletin 86/45

(45) Publication of the grant of the patent:
02.08.89 Bulletin 89/31

(84) Designated Contracting States:
BE CH DE FR GB IT LI NL SE

(56) References cited:
EP-A-0 063 205
US-A-3 668 420
US-A-4 103 179
US-A-4 327 337

(73) Proprietor: Hughes Aircraft Company
200 North Sepulveda Boulevard P.O.Box 1042
El Segundo, California 90245 (US)

(72) Inventor: BRUESSELBACH, Hans, W.
847 Malibu Meadows Drive
Calabasas, CA 91302 (US)
Inventor: DEWHIRST, Donald, R.
4822 White Court
Torrance, CA 90503 (US)

(74) Representative: Kuhnen, Wacker & Partner
Schneggstrasse 3-5 Postfach 1553
D-8050 Freising (DE)

Courier Press, Leamington Spa, England.

## Description

### Background of the invention

This invention relates to lasers and more particularly to Raman lasers or Raman cells driven by laser sources. The invention further relates to Nd:YAG driven Raman lasers.

Advanced ranging or tracking devices use reflected light from a laser source in order to ascertain target and range data for many applications. It is obviously desirable to operate such devices at wavelengths which are considered "eye-safe" in order to reduce risk to personnel encountering the direct or reflected beams of laser light.

The term "eye-safe" is applied to radiation that does not, in general, cause tissue damage to the human eye. It is known that for wavelengths between 400 and 1400 nanometers, radiation tends to cause retinal damage; while for wavelengths longer than 1400 nanometers, the radiation is absorbed within or near the surface of the cornea and much higher levels of radiation can be tolerated before reaching the level that can cause corneal damage.

Research in the area of laser safety has led to the development of specific standards for "eye-safe" lasers. The "Regulations for the Administration and Enforcement of the Radiation Control for Health and Safety Act of 1968", published by the U.S. Department of Health, generally supports the wavelength of 1.54 µm as the standard for "eye-safe." The standards for lasers operating at this wavelength allow several orders of magnitude greater output energy and power than for non "eye-safe" lasers.

Raman lasers utilizing a Raman scattering medium can be used to convert laser radiation of one wavelength to a longer wavelength. This allows lasers operating at non "eye-safe" wavelengths to produce radiation within the "eye-safe" wavelength region.

For example, by using methane with a frequency shift of 2916 $cm^{-1}$, a Nd:YAG laser operating at a wavelength of 1.06 µm can have its output converted to the "eye-safe" 1.54 µm wavelength. The 1.06 µm laser radiation is coupled into a resonator containing the methane Raman medium and produces scattered radiation at the 1.54 µm wavelength.

Raman shifted lasers such as those described in U.S. Patent Numbers 4,103,179, issued to W. Schmidt, and 3,668,420 issued to J. T. Vanderslice use a Raman cell resonator to convert 1.06 µm wavelength radiation from a pump laser to 1.54 µm. The Raman resonator of each of these patents has a pressurized gas medium disposed along an optical path between two mirrors. One mirror, the input mirror, is substantially totally transmissive at 1.06 µm and substantially totally reflective at 1.54 µm. This allows 1.06 µm radiation to enter the cell but does not allow 1.54 µm radiation back into the pumping laser. The second mirror, the output mirror, is partially reflective at 1.54 µm and substantially totally reflective at 1.06 µm. This configuration allows the output of 1.54 µm radiation from the Raman resonator but traps the 1.06 µm pumping radiation. However, this Raman resonator technique is not without its limitations.

The Raman scattering process is intensity dependent. Therefore, any decrease in pump radiation intensity lessens the conversion efficiency of radiation to the new wavelength. Improper alignment, spacing or curvature of the mirrors in the Raman cell resonator causes the radiation to diverge from central axis or degrade the focus within the Raman cell. This in turn lowers the intensity and thus decreases conversion. The Raman resonator formed by mirrors also needs to be precisely aligned with the pump laser and associated optics to ensure optimum radiation transfer into the Raman resonator and maintain maximum pump intensity along the focused optical path.

In addition, other scattering processes such as Stimulated Brilluoin Scattering (SBS) can greatly decrease the wavelength conversion efficiency. The SBS radiation returns through the Raman medium and the input mirror to the pump laser. Large enough amounts of radiation returning to the pump laser causes operational problems or damage.

SBS normally occurs to some extent within the Raman medium but is greatly enhanced for misaligned optics. The SBS and Raman scattering processes are in direct competition within the medium. The threshold for onset of Stimulated Raman Scattering (SRS) must be below the SBS threshold so that SRS occurs first, and energy is depleted from the medium by transfer into radiation at the desired Raman wavelength. However, misaligned optics increase the SRS threshold by detuning the Raman resonator and by causing non-overlapping paths for the incident pump radiation and Raman scattered radiation.

The SBS is reflected back into the pump laser and can damage the pump laser or severely impact on its performances.

Finally, from EP—A—00 63 205 a Raman laser device is known in which laser radiation at a first wavelength is converted in a Raman medium into a laser radiation of a second wavelength by Raman scattering processes. The laser radiation at the first wavelength is transmitted through an output reflector and directed to the so-called "Richtungsisolator' being formed by a polarizer and a quarter-wave plate. Having passed the 'Richtungsisolator' the laser radiation at the first wavelength is transmitted to a single Raman reflector and is focused via a lens onto a focal point within the Raman medium.

What is needed is a method and apparatus to ensure good alignment of the driver laser and Raman cell and simplification of the overall Raman laser.

### Summary

In accordance with the present invention there is a provided a Raman laser comprising:

a pump laser, for providing radiation at a first wavelength, having an output reflector;

a Raman medium disposed along the optical path of said first wavelength radiation from said pump laser for converting the wavelength of said first wavelength radiation to a predetermined second wavelength by Raman scattering processes;

focusing means disposed between said output reflector and said Raman medium and positioned suitably adjacent said Raman medium for focusing said first wavelength into said Raman medium:

said output reflector being partially reflective of said first wavelength radiation so as to transmit said first wavelength radiation from said pump laser towards said Raman medium, and substantially 100% reflective of said second wavelength radiation so as to act as a Raman reflector for said Raman medium; and

said output reflector being aligned relative to said focusing means and said Raman medium so as to enhance desired wavelength conversion and substantially avoid feedback damage to said pump laser.

Further there is provided a method for laser wavelength conversion, comprising the steps of:

exciting a lasing medium to produce pump laser radiation at a first wavelength;

passing said pump laser radiation, along a first path, first through an output reflector which is partially reflective of said pump laser radiation, and second through a focusing means which focuses said pump laser radiation to a focus within a Raman medium, stimulated conversion of said pump laser radiation to a second wavelength occurring in said Raman medium, and

reinforcing said stimulated conversion of said pump laser radiation by passing said second wavelength radiation back through said focusing means along a second path;

then reflecting said second wavelength radiation, from said output reflector which is substantially 100% reflective of said second wavelength radiation, along a third path back through said focusing means and into said Raman medium, and

aligning said output reflector, focusing means and said Raman medium so that said first, second and third paths are substantially identical so as to reduce undesired scattered radiation to enhance desired wavelength conversion.

Accordingly, the present invention provides a Raman laser apparatus having the advantage of automatic alignment between the pump laser and Raman medium. Additionally, the invention provides improved efficiency and simplified optics.

Brief description of the drawings

Figure 1 is a schematic view of a Raman laser according to the prior art.

Figure 2 is a schematic view of an embodiment of a Raman laser according to the invention.

We have constructed a new Raman laser without the use of a conventional resonator around the Raman medium. With pump laser radiation input at one end of a Raman medium, Raman shifted output is obtained at the other end without reflectors on both ends of the optical path through the Raman medium.

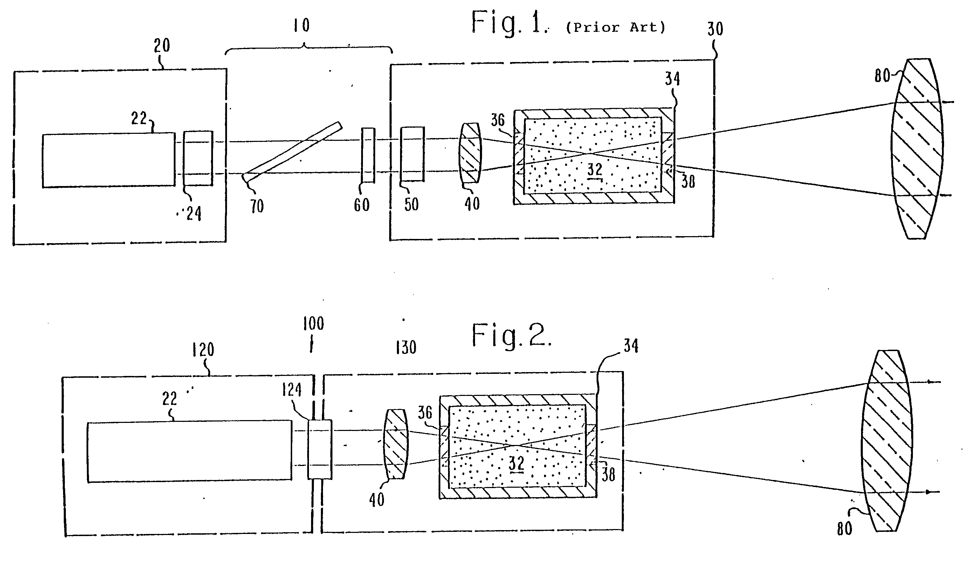

To aid the understanding of the present invention, a prior art system similar to that known from EP—A—00 63 205 is explained in detail with reference to Fig. 1. Referring now to Fig. 1, said prior art Raman laser 10 employs a pump laser 20 as a source of substantially monochromatic polarized radiation. Pump laser 20 comprises many elements (not shown) known in the art and uses one of several known lasing media. For purposes of clarity, the system is described using a Nd:YAG laser operating at 1.064 μm (1,064 nm), although it will become apparent to one skilled in the art that other laser materials and wavelengths can be used.

The Nd:YAG medium 22 of pump laser 20, is typically positioned between two reflection means (one shown as 24) forming an optical resonator. In this arrangement, the output occurs through one reflection means 24, which is partially reflective of radiation at 1.06 μm. Reflection means 24 can be an optical quality plate with a reflective coating, a polished mirror or other means known in the art.

For reflection means an optical quality glass plate having a partially reflective coating on one side is used. Generally, laser output reflectors are constructed with an anti-reflection coating on the outer surface and the reflective coating on the other. However, the coating location can be reversed. The only requirement is that a sufficient amount of radiation be confined within laser 20 to support the laser oscillation. Typically, the reflective coating on reflection means 24 is approximately 30% reflective of 1.06 μm radiation for a Nd:YAG laser.

To achieve the high intensity required of pump laser 20, an optical Q-switch is included in the optical resonator. The Q-switch (not shown) can be a saturable or bleachable dye cell, or other means known in the art, which is optically bleached to achieve transparency at predetermined energy densities or optical intensities. Therefore, energy builds up in the pump laser resonator until the Q-switch becomes optically transparent at which time the resonator Q greatly increases and a high peak power pulse is produced.

The 1.06 μm radiation exiting pump laser 20 through output reflection means 24 is directed to a Raman cell 30 for conversion to 1.54 μm. Raman cell 30 employs a Raman medium 32 such as, but not limited to, pressurized methane confined within an enclosure 34 having input and output windows 36 and 38, respectively.

The efficiency for the conversion of 1.06 μm radiation to 1.54 μm by scattering processes within enclosure 34, is dependent on the intensity of the incident radiation $I_i$, (from the pump laser 20) the gain of the Raman medium, g, and the length, L, of the interaction zone in Raman medium 32. These factors are generally related by the expression:

$$I_t = I_o e^{g_i i L} \qquad (1)$$

where $I_t$ is the transmitted/converted intensity and $I_o$ is a very low level intensity output due to thermal conversion in the medium.

Raman lasers, such as those of Schmidt and Vanderslice, use mirrors adjacent to the input and output windows, to create multi-pass resonators within the Raman medium in enclosure 34. This is done to increase $I_t$ by increasing factors on the right side of Equation (1). Radiation is concentrated along a narrow beam path by concave mirrors to increase $I_i$ and given a multi-pass path within the Raman medium to increase L.

However, an efficient Raman laser can be constructed without the use of such a resonator for Raman medium 32. For a two- or threefold increase in the intensity of the incident optical radiation, $I_i$, no reflective surface is needed adjacent to output window 38 of Raman cell 30. However, high efficiency is difficult to obtain because of competing nonlinear effects.

In the described prior art system, the factors on the right side of Equation (1) are increased by using a lens and a single reflector. A lens 40 is positioned adjacent the input window 36 of enclosure 34. Alternatively, lens 40 replaces window 36 itself. This lens focuses radiation from pump laser 20 into enclosure 34 and increases the intensity of the incident radiation at its focal point. Near the focal point of lens 40, along the direction of propagation, for some threshold of input energy the radiation intensity is sufficiently high to support Raman scattering and efficiently produce wavelength conversion. However, below this threshold input beam energy, radiation deposited in this region of enclosure 34 is not efficiently converted to the new wavelength. The input energy threshold can be reduced with a longer interaction length to increase the gain. Therefore, a reflection means 50 is provided to create such a longer interaction zone.

Reflection means 50 is positioned adjacent lens 40 on the pump laser side of enclosure 34. Reflection means 50 can be, but is not limited to, an optical flat quality glass plate having a coating reflective at 1.54 μm. The reflective coating, not shown, on reflection means 50 can reside on either side as in the case of reflection means 24. The only limitation is that reflection means 50 is preferred to be substantially totally reflective of radiation at the converted wavelength of 1.54 μm and substantially non-reflective of 1.06 μm radiation.

There generally exists some thermal noise and spontaneous Raman scattering in Raman medium 32 which give rise to the $I_o$ term of Equation (1). The thermal noise results from some degree of conversion of local molecular vibrational energy into the wavelength of interest (1.54 μm). Such natural radiation exists throughout Raman medium 32. Some thermal noise and/or spontaneous scattered radiation propagates from a region on the output side of enclosure 34 toward lens 40 through the high gain interaction zone in the lens 40 focal region. Here the existing radiation encounters pump laser radiation resulting in stimulated converted radiation at 1.54 μm coherently reinforcing the existing radiation and forming a 1.54 μm beam propagating toward input window 36 and lens 40.

The 1.54 μm radiation propagates through lens 40 where it encounters reflection means 50 which reflects the radiation back through lens 40 and enclosure 34. On the return pass through enclosure 34 the radiation stimulates the conversion of more incident pump laser radiation to the 1.54 μm wavelength. The converted radiation then propagates as an in-phase 1.54 μm laser beam out of enclosure 34 through output window 38 and is collimated by conventional collimating means 80, positioned adjacent to output window 38.

The power required for the wavelength conversion of radiation from pump laser 20 depends on the nature of the Raman medium and pump laser but for purposes of this embodiment, the pump laser produces energy in the range of a few megawatts.

The above system can still suffer from the previously described misalignment complications. Therefore, a polarizer 70 and quarter wave plate 60 combination, as known in the art, are used to prevent SBS radiation from re-entering pump laser 20.

Polarizer 70 transmits the already polarized radiation from pump laser 20. Quarter-wave plate 60 is oriented to divide polarized radiation from pump laser 20 into two equal components and shift this phase by 90° to produce circularly polarization. SBS radiation reflected back through quarter-wave plate 60 undergoes a second 90° phase shift to become the orthogonal polarization to that of pump laser 20 and is reflected out of the optical path by polarizer 70. Therefore, the combination of polarizer 70 and quarterwave plate 60, as known in the art, allows polarized pump laser radiation to propagate to Raman cell 30 but prevents SBS from re-entering pump laser 20. This process establishes isolation of the pump laser from SBS radiation previously described.

Referring now to Fig. 2 a preferred embodiment of a Raman laser 100 in accordance with the present invention uses a pump laser 120 and a Raman cell 130 arranged in the same manner as pump laser 20 and cell 30 of the described prior art system. Laser medium 22, Raman medium 32, enclosure 34, windows 36 and 38, and lens 40 have the same functions as the corresponding parts in the previously described prior art system. However, output reflection means 24 is replaced by output reflection means 124, and reflection means 50, polarizer 70 and quarter-wave plate 60 are not used.

Reflection means 124 has a reflective coating on one surface which is partially reflective of pump laser radiation, in this case, 1.06 μm wavelength, and substantially 100% reflective of the wavelength radiation produced in Raman cell 30, here 1.54 μm. The reflective coating on reflection means 124 can reside on either side of means 124.

The result of this arrangement is that the function of reflecting converted radiation from enclosure 34 back through enclosure 34 is performed by the output reflector for pump laser 20. Therefore, whatever the alignment of Raman cell 130 relative to pump laser 120, radiation transferred through lens 40 into enclosure 34 and converted to the new Raman wavelength, as previously described, returns through lens 40 along substantially the same path.

The converted wavelength radiation is then reflected by reflection means 124 back into enclosure 34 where it enhances conversion as previously described. Because the radiation will always cover a closely identical path, automatic alignment of the optics is achieved and the Raman process is very efficient and dominates over SBS. Therefore, very little SBS radiation exists or is reflected toward pump laser 20, eliminating the problem of damage to the pump laser.

Example I

A Nd:YAG pump laser 20 producing a 50 millijoule output beam of Q-switched 1.06 μm radiation was used to drive a Raman cell 30 containing pressurized methane gas and having a reflection means 50 adjacent to a lens 40 as per the embodiment of Fig. 1. The energy output of the Raman laser was 14 millijoules of 1.54 μm radiation.

Example II

The second embodiment, described above, was also tested with reflection means 50 removed and a reflective, optically flat, surface used as part of the output of pump laser 20. This configuration produced 21 millijoules of 1.54 μm radiation from the 50 millijoule beam of 1.06 μm radiation. Therefore, the second embodiment of the invention represents a 50 percent increase in efficiency over the first embodiment, and in addition has the advantage of the automatic alignment described above.

Practicing the method and apparatus of the invention provides a Raman laser with improved efficiency and automatic alignment of the pump laser and Raman cell. There is decreased complexity for the optics and a compact unitary structure arises.

For purposes of clarity and in keeping with the primary intended application to which the invention is directed, the preferred embodiments have been described using a gaseous Raman medium such as methane. However, the Raman medium employed can be one of several gases, liquids or solids that are known to produce SRS radiation at desired wavelengths. Examples of other Raman media include carbon monoxide, hydrogen, deuterium, ammonia and a variety of glasses. The specific media employed is determined by the desired output wavelength, the laser source wavelength, allowable complexity, and power requirements. The method and apparatus of the present invention provides an improved Raman laser for a variety of Raman media.

The foregoing description of preferred embodiments has been presented for purposes of illustration and description. It is not intended to be exhaustive nor to limit the invention to the precise form disclosed, and many modifications and variations are possible in light of the above teaching. The embodiments were chosen and described to best explain the principles of the invention and its practical application to thereby enable others skilled in the art to best utilize the invention in various embodiments and with various modifications as are suited to the particular use contemplated. It is intended that the scope of the invention be defined by the claims and their equivalents.

**Claims**

1. A Raman laser comprising:
a pump laser (120), for providing radiation at a first wavelength, having an output reflector (124);
a Raman medium (32) disposed along the optical path of said first wavelength radiation from said pump laser (120) for converting the wavelength of said first wavelength radiation to a predetermined second wavelength by Raman scattering processes;
focusing means (40) disposed between said output reflector (124) and said Raman medium (32) and positioned suitably adjacent said Raman medium (32) for focusing said first wavelength radiation into said Raman medium (32);
said output reflector (124) being partially reflective of said first wavelength radiation so as to transmit said first wavelength radiation from said pump laser (120) towards said Raman medium (32), and substantially 100% reflective of said second wavelength radiation so as to act as a Raman reflector for said Raman medium (32);
said output reflector (124) being aligned relative to said focusing means (40) and said Raman medium (32) so as to enhance desired wavelength conversion and substantially avoid feedback damage to said pump laser (120).

2. The Raman laser of claim 1 wherein said pump laser (120) comprises an optically pumped Nd:YAG medium.

3. The Raman laser of claim 1 wherein said first wavelength is 1.06 μm.

4. The Raman laser of claim 1 wherein said second wavelength is 1.54 μm.

5. The Raman laser of claim 1 further comprising an enclosure (34) surrounding said Raman medium (32), said enclosure (34) having input (36) and output (38) windows for the passage of radiation.

6. The Raman laser of claim 5 wherein said input window is adapted to act as the focusing means (40).

7. The Raman laser of claim 5 wherein said Raman medium (32) comprises a pressurized gas selected from the group consisting of deuterium, hydrogen or methane.

8. The Raman laser of claim 1 wherein said output reflector (124) is a dielectric coated optically flat glass plate.

9. The Raman laser of claim 1 wherein said focusing means (40) is a convex lens.

10. The Raman laser of claim 1 further comprising collimating means (80) positioned adjacent said Raman medium (32) for forming a collimated laser beam from radiation at said second wavelength.

11. The Raman laser of claim 8 wherein the optically flat glass plate (124) with two sides has a reflective coating on either one of said two sides, said reflective coating being partially reflective of said first wavelength radiation and substantially 100% reflective of said second wavelength radiation, and said coated plate (124) is aligned relative to said Raman medium (32) so that said first and second wavelength radiation follow substantially identical paths, in oscillating between said coated plate (124) and said Raman medium (32), irrespective of the alignment of said Raman medium (32) relative to said pump laser (120), whereby desired wavelength conversion by Raman scattering processes is enhanced.

12. The Raman laser of claim 1, 3, 4, 5 or 11, wherein the pump laser (120) is Q-switched.

13. A method for laser wavelength conversion, comprising the steps of:

exciting a lasing medium to produce pump laser radiation at a first wavelength;

passing said pump laser radiation, along a first path, first through an output reflector (124) which is particularly reflective of said pump laser radiation, and second through a focusing means (40) which focuses said pump laser radiation to a focus within a Raman medium (32), stimulated conversion of said pump laser radiation to a second wavelength occurring in said Raman medium (32), and

reinforcing said stimulated conversion of said pump laser radiation by passing said second wavelength radiation back through said focusing means (40) along a second path;

then reflecting said second wavelength radiation, from said output reflector (124) which is substantially 100% reflective of said second wavelength radiation, along a third path back through said focusing means and into said Raman medium, and

aligning said output reflector (124), focusing means (40) and said Raman medium (32) so that said first, second and third paths are substantially identical so as to reduce undesired scattered radiation to enhance desired wavelength conversion.

## Patentansprüche

1. Ein Raman-Laser, mit:

einem Pumplaser (120), zur Erzeugung von Strahlung einer ersten Wellenlänge, mit einem Ausgangsreflektor (124);

einem Raman-Medium (32), das entlang des optischen Weges der Strahlung erster Wellenlänge des Pumplasers (120) angeordnet ist, um die Wellenlänge der Strahlung erster Wellenlänge in eine vorbestimmte, zweite Wellenlänge durch Raman-Streuprozesse zu konvertieren;

Fokussiervorrichtungen (40), die zwischen dem Ausgangsreflektor (124) und dem Raman-Medium (32) angeordnet sind und in geeigneter Nähe des Raman-Mediums (32) positioniert sind, um die Strahlung erster Wellenlänge in das Raman-Medium (32) zu fokussieren;

wobei der Ausgangsreflektor (124) partiell reflektierend für die Strahlung erster Wellenlänge ist, um die Strahlung erster Wellenlänge von dem Pumplaser (120) zum Raman-Medium (32) zu übertragen, und im wesentlichen 100% reflektierend für die Strahlung zweiter Wellenlänge ist, um als ein Raman-Reflektor für das Raman-Medium (32) zu dienen;

wobei der Ausgangsreflektor (124) relativ zu den Fokussiervorrichtungen (40) und dem Raman-Medium (32) ausgerichtet ist, um die erwünschte Wellenlängenkonversion zu erhöhen und im wesentlichen eine Rückkopplungszerstörung des Pumplasers (120) zu verhindern.

2. Der Raman-Laser nach Anspruch 1, worin der Pumplaser (120) ein optisch gepumptes Nd:YAG-Medium beinhaltet.

3. Der Raman-Laser nach Anspruch 1, worin die erste Wellenlänge 1.06 µm ist.

4. Der Raman-Laser nach Anspruch 1, worin die zweite Wellenlänge 1.54 µm ist.

5. Der Raman-Laser nach Anspruch 1, der ferner eine Umhüllung (34) enthält, die das Raman-Medium (32) umschließt, wobei die Umhüllung (34) Eingangs- (36) und Ausgangsfenster (38) zum Durchlaß der Strahlung aufweist.

6. Der Raman-Laser nach Anspruch 5, worin das Eingangsfenster angepaßt ist, um als die Fokussiervorrichtung zu wirken.

7. Der Raman-Laser nach Anspruch 5, worin das Raman-Medium (32) ein unter Druck stehendes Gas beinhaltet, das aus der Gruppe ausgewählt wurde, die aus Deuterium, Wasserstoff oder Methan gebildet wird.

8. Der Raman-Laser nach Anspruch 1, worin der Ausgangsreflektor (124) aus einer dielektrisch beschichteten, optisch ebenen Glasplatte besteht.

9. Der Raman-Laser nach Anspruch 1, worin die Fokussiervorrichtungen (40) eine Konvexlinse sind.

10. Der Raman-Laser nach Anspruch 1, der ferner Kollimierungsvorrichtungen (80) beinhaltet, die in der Nähe des Raman-Mediums (32) angeordnet sind, um einen kollimierten Laserstrahl aus Strahlung der zweiten Wellenlänge zu bilden.

11. Der Raman-Laser nach Anspruch 8, worin die optisch ebene Glasplatte (124) mit zwei Seiten auf der einen Seite der zwei Seiten eine reflektierende Beschichtung aufweist, wobei die reflektierende Beschichtung partiell reflektierend für die Strahlung erster Wellenlänge ist und im wesentlichen 100% reflektierend für die Strahlung zweiter Wellenlänge ist, und worin die beschichtete Platte (124) relativ zum Raman-Medium (32) ausgerichtet ist, um die Strahlung erster und zweiter Wellenlänge durch Oszillieren zwischen der beschichteten Platte (124) und dem Raman-Medium (32) im wesentlichen identischen Wegen folgen zu lassen, unabhängig von der Ausrichtung des Raman-Mediums (32) relativ zu dem Pumplaser (120), wobei die gewünschte Wellenlängenkonversion der Raman Streuprozesse erhöht wird.

12. Der Raman-Laser nach Anspruch 1, 3, 4, 5 oder 11, worin der Pumplaser (120) Q-geschaltet ist.

13. Ein Verfahren zur Laserwellenlängenkonversion, das die folgenden Schritte beinhaltet:

Anregen eines Lasermediums, um Pumplaserstrahlung bei einer ersten Wellenlänge zu erzeugen;

Führen der Pumplaserstrahlung entlang eines ersten Weges, als erstes durch einen Ausgangsreflektor (124), der partiell reflektierend für die Pumplaserstrahlung ist, und als zweites durch eine Fokussiervorrichtung (40), die die Pumplaserstrahlung zu einem Fokus in einem Raman-Medium (32) fokussiert, und stimulierte Konversion der Pumplaserstrahlung in eine zweite Wellenlänge, welche in dem Raman-Medium (32) entsteht, und

Verstärkung der stimulierten Konversion der Pumplaserstrahlung durch Rückführung der Strahlung zweiter Wellenlänge durch die Fokussiervorrichtung (40) entlang eines zweiten Weges;

dann Reflektieren der Strahlung zweiter Wellenlänge von dem Ausgangsreflektor (124), der im wesentlichen 100% reflektierend für die Strahlung zweiter Wellenlänge ist entlang eines dritten Weges, durch die Fokussiervorrichtung und in das Raman-Medium, und

Ausrichtung des Ausgangsreflektors (124), der Fokussiervorrichtung (40) und des Raman-Mediums (32), so daß der erste, zweite und dritte Weg im wesentlichen identisch ist, um unerwünschte Streustrahlung zu vermindern und die gewünschte Wellenlängenkonversion zu erhöhen.

**Revendications**

1. Un laser Raman comprenant:

un laser de pompage (120), destiné à produire un rayonnement à une première longueur d'onde, comportant un réflecteur de sortie (124);

un milieu donnant lieu à un effet Raman (32), qui est disposé le long du chemin optique du rayonnement de première longueur d'onde provenant du laser de pompage (120), pour convertir la longueur d'onde du rayonnement de première longueur d'onde en une seconde longueur d'onde prédéterminée, par des processus de diffusion Raman;

des moyens de focalisation (40), placés entre le réflecteur de sortie (124) et le milieu Raman (32), et positionnés de façon appropriée en un emplacement adjacent au milieu Raman (32), pour focaliser le rayonnement de première longueur d'onde dans le milieu Raman (32);

le réflecteur de sortie (124) réfléchissant partiellement le rayonnement de première longueur d'onde, de façon à transmettre vers le milieu Raman (32) le rayonnement de première longueur d'onde qui provient du laser de pompage (120), et réfléchissant pratiquement à 100% le rayonnement de seconde longueur d'onde, de façon à fonctionner en réflecteur Raman pour le milieu Raman (32);

le réflecteur de sortie (124) étant alignée par rapport aux moyens de focalisation (40) et au milieu Raman (32) de façon à favoriser la conversion de longueur d'onde désirée et à éviter pratiquement tout endommagement du laser de pompage (120) par retour d'énergie vers celui-ci.

2. Le laser Raman de la revendication 1, dans lequel le laser de pompage (120) comprend un milieu Nd:YAG qui est soumis à un pompage optique.

3. Le laser Raman de la revendication 1, dans lequel la première longueur d'onde est de 1,06 µm.

4. Le laser Raman de la revendication 1, dans lequel la seconde longueur d'onde est de 1,54 µm.

5. Le laser Raman de la revendication 1, comprenant en outre une enceinte (34) qui entoure le milieu Raman (32), et cette enceinte (34) comporte des fenêtres d'entrée (36) et de sortie (38) pour le passage du rayonnement.

6. Le laser Raman de la revendication 5, dans lequel la fenêtre d'entrée est conçue pour remplir la fonction des moyens de focalisation (40).

7. Le laser Raman de la revendication 5, dans lequel le milieu Raman (32) consiste en un gaz sous pression qui est sélectionné dans le groupe comprenant le deutérium, l'hydrogène ou le méthane.

8. Le laser Raman de la revendication 1, dans lequel le réflecteur de sortie (124) est une plaque de verre optiquement plane, revêtue d'un diélectrique.

9. Le laser Raman de la revendication 1, dans lequel les moyens de focalisation (40) consistent en une lentille convexe.

10. Le laser Raman de la revendication 1, comprenant en outre des moyens de collimation (80) placés en position adjacente au milieu Raman (32), pour former un faisceau laser collimaté, à partir du rayonnement à la seconde longueur d'onde.

11. Le laser Raman de la revendication 8, dans lequel la plaque de verre optiquement plane (124), ayant deux faces, comporte un revêtement réfléchissant sur l'une quelconque des deux faces, ce revêtement réfléchissant réfléchissant partiellement le rayonnement de première longueur d'onde et réfléchissant pratiquement à 100% le rayonnement de seconde longueur d'onde, et la plaque revêtue (124) est alignée par rapport au milieu Raman (132) de façon que les rayonnements de première et de seconde longueurs d'onde suivent pratiquement des chemins identiques, en oscillant entre la plaque revêtue (124) et le milieu Raman (32), indépendamment de l'alignement du milieu Raman (32) par rapport au laser de pompage (120), ce qui a pour effet de favoriser la conversion de longueur d'onde désirée par des processus de diffusion Raman.

12. Le laser Raman de la revendication 1, 3, 4, 5 ou 11, dans lequel le laser de pompage (120) est un laser fonctionnant en mode déclenché.

13. Un procédé de conversion de longueur d'onde d'un laser, comprenant les opérations suivantes:

on excite un milieu laser pour produire un rayonnement laser de pompage à une première longueur d'onde;

on fait passer ce rayonnement laser de pompage, selon un premier chemin, premièrement à travers un réflecteur de sortie (124) qui réfléchit partiellement le rayonnement laser de pompage, et secondement à travers des moyens de focalisation (40) qui focalisent le rayonnement laser de pompage en un foyer qui se trouve à l'intérieur d'un milieu Raman (32), une conversion stimulée du rayonnement laser de pompage vers une seconde longueur d'onde se produisant dans le milieu Raman (32), et

on renforce la conversion stimulée du rayonnement laser de pompage en faisant retourner le rayonnement de seconde longueur d'onde à travers les moyens de focalisation (40), en suivant un second chemin;

on provoque ensuite la réflexion du rayonnement de seconde longueur d'onde sur le réflecteur de sortie (124), qui réfléchit pratiquement à 100% le rayonnement de seconde longueur d'onde, selon un troisième chemin qui retraverse les moyens de focalisation et entre dans le milieu Raman; et

on aligne le réflecteur de sortie (124), les moyens de focalisation (40) et le milieu Raman (32), de façon que les premier, second et troisième chemins soient pratiquement identiques, afin de réduire le rayonnement diffusé non désiré pour favoriser la conversion de longueur d'onde désirée.

Fig. 1. (Prior Art)

Fig. 2.